# EUROPEAN PATENT APPLICATION

(11) **EP 3 718 848 A1**
(43) Date of publication of application: **07.10.2020**
(21) Application number: 19167387.0
(22) Date of filing: 04.04.2019
(51) Int. Cl.: B60W 50/14, B60W 50/08, B60W 40/08, G05D 1/00

(54) **SYSTEM AND METHOD FOR EXECUTING AN AUTOMATED DRIVING MANEUVER IN A TAKEOVER PROCESS OF A VEHICLE FROM AUTOMATED DRIVING TO MANUALLY DRIVING**

(71) Applicant: Visteon Global Technologies, Inc., Van Buren Township, MI 48111-5711 (US)
(72) Inventor: MUELLER-TOMFELDE, Christian, 79825 Korntal (DE); KUDRUSS, Manuel, 76227 Karlsruhe (DE)
(74) Representative: MERH-IP Matias Erny Reichl Hoffmann Patentanwälte PartG mbB

(57) **Abstract**

A system and method for executing an automated driving maneuver in a takeover process of a vehicle from automated driving to manually driving includes monitoring a driver's behavior in response to a notification to take over in driving. Based on the monitored behavior of the driver, a probability is determined with reference data that the driver takes over in driving within a leeway period. The probability forms the basis, whether an automated driving maneuver is executed or not.

## Description

### TECHNICAL FIELD

One or more embodiments described herein relate to a system and a method for executing an automated driving maneuver in a takeover process of a vehicle from automated driving to manually driving.

### BACKGROUND

A conventional vehicle includes a role called driver, which is cast by an occupant of the conventional vehicle. The driver is tasked with driving the vehicle. This may be referred to as manual driving, for the driver is in control of driving the conventional vehicle. In the conventional vehicle, for example, the driver may control a steering wheel, a brake pedal, an accelerator pedal, an ignition setting (such as "ON" or "OFF"), and a gear selector (such as park, reverse, neutral, drive, or another gear). Through the steering wheel, for example, the driver may control a movement of the conventional vehicle, such as whether the vehicle turns left, right, or goes straight. Through the accelerator pedal, for example, the driver may control a speed or acceleration of the conventional vehicle. Thorough the brake pedal, for example, the driver may cause the conventional vehicle to slow from a higher speed to a slower speed or cause the conventional vehicle to outright stop. Through the gear selector, for example, the driver may determine a state for a drive-line of the conventional vehicle, which may determine whether the conventional vehicle may proceed in a forward direction, a reverse direction, or neither. Furthermore, the driver may determine whether the vehicle is in an operating state, such as by setting an ignition setting to ON.

In a fully autonomous vehicle, however, an automated system may be tasked with driving the vehicle, not an occupant. As such, in the autonomous vehicle, the automated system may control driving. Via the automated system, for example, the autonomous vehicle may successfully drive from a starting point to an intended destination. This may be with or without any occupants. When the autonomous vehicle includes one or more occupants, the one or more occupants may purely be passengers, as opposed to one also having the role of driver.

With the introduction of automated driving (AD, level 3+) drivers are allowed to do other things than holding hand on the steering wheel and monitoring the vehicle's actions. Examples for "non-driving related activities" are reading a newspaper, book or magazine and reading and writing emails on mobile devices. For level 3 AD systems, it will be mandatory for juridical reasons to grant the driver sufficient leeway to transition from the non-driving related activity back to the manual dynamic driving task. During the transition period which can be of several seconds, the driving system must remain under the assumption that the driver will finish the transition in-time.

### SUMMARY

One or more embodiments relate to a system for executing an automated driving maneuver in a takeover process of a vehicle from automated driving to manually driving. The system may comprise an output unit, a monitoring unit, an examination unit and a driving unit. The output unit may output to a driver a notification to take over in driving. The notification may be audible, haptic and/or acoustical. Non-limiting reasons for outputting of a request to takeover in driving may be a failure of a sensor, change in weather conditions, system errors, leakage of radio signals like GPS, etc. A reason for outputting a notification to take over in driving may be foreseeable (standard takeover), for example, due to a tunnel, or may occur suddenly (non-standard takeover), because a sensor fails. The notification may be provided, for example, by a corresponding sensor/system or a control system like an advanced driving assistance system (ADAS).

The monitoring unit may be configured to monitor a driver's behavior after outputting the request to take over in driving. The monitoring unit may comprise sensors like capacitive sensors, infrared sensors, camera sensors, radio sensors, force sensors, etc. Monitoring may also include detecting an absence of any reaction of the driver to the notification for taking over in driving.

According to an aspect, the examination unit may examine the detected behavior of the driver based on reference data. Reference data may include data relating to a predetermined behavior in response to the notification to take over in driving in particular based on empirical data and/or statistical data relating to takeover processes from automated driving to manually driving. The examination unit may determine a probability that the driver takes over in driving within a predetermined time-period or may determine a value predicting whether the driver takes over in driving within the predetermined time-period or not.

According to an aspect, the driving unit may execute an automated driving maneuver based on the result of the examination and/or may output a second notification to the driver concerning the takeover process. Outputting the second notification may include a notification to take over in driving and/or may include instructions to the driver concerning the takeover process, like to put a hand on a steering wheel and/or to actuate a pedal of the vehicle. Outputting a second notification may also comprise outputting warnings. The warnings may differ in intensity, like in the volume level of acoustical signals, in its size and/or color on a display and/or in intensity of a vibration.

Summarizing, the system may enable executing driving maneuvers based on a probability that the driver takes over in driving within the predetermined time-period (transition time/leeway period). This may have the advantage, that a leeway period is provided in full-length while safety and driving comfort are improved.

According to another aspect, monitoring a driver's behavior may include detecting of a behavioral characteristic of the driver and a corresponding point in time relative to the output of the notification to take over in driving, in particular at least one behavioral characteristic of the following group: gaze reaction (GR); gaze on the road (GoR); hand on a steering wheel (HoW); foot on a pedal (FoP); and turning automated driving off and taking over in driving (ADoff). Different behavioral characteristics may allow different conclusions regarding a driver's intention to take over in driving within the predetermined time period. To analyze the driver's behavior based on predetermined behavioral characteristics may form a fundamental basis for a reliable conclusion, since it allows to apply predefined criteria for making the driver's behavior predictable.

According to an aspect, reference data may include data relating to a point in time until which a predetermined behavioral characteristic of a driver in response to the notification to take over in driving is expected. This may be particularly based on empirical data and/or statistical data relating to takeover processes from automated driving to manually driving. The points in time may be relative to a point in time of outputting the notification to take over in driving. This may enable a unique examination of a driver's behavior based on the reference data, which may be implemented straightforward.

According to an aspect, examination of the examination unit may comprise determination of a probability p that a driver takes over in driving within a predetermined time period (TT) after the output of the notification to take over in driving at a time t=0, under the condition p(t) >= 0; wherein p(t <= TT) >p_{crit}, if the driver exhibits the predetermined behavior; and p(t<=TT) <p_{crit}, if the driver does not exhibit the predetermined behavior, with p_{crit} being a predetermined threshold value for executing a driving maneuver, wherein examination whether the driver exhibits the predetermined behavior is based on the reference data and on the detected behavior of the driver. Thus, executing a driving maneuver may depend on whether the driver shows the predetermined behavior or not.

According to an aspect, the system may comprise a storage unit for storing data of a monitored behavior of the driver after outputting a notification to take over in driving including behavioral characteristics and corresponding points in time provided by a monitoring unit and a modification unit for adapting the reference data based on the stored data of the monitored behavior of the driver after outputting a notification to take over in driving. The storage unit may comprise a volatile and/or a non-volatile storage. Adapting may include building a sum, in particular a weighted sum, of the reference data and the stored data relating to the monitored behavior. Thus, the reference data may be adapted to a typical behavior of the driver in a takeover process.

According to an aspect, the automated driving maneuver may comprise at least one of the group: changing a lane or keeping the lane; accelerating or decelerating the vehicle or maintaining the velocity of the vehicle; and turning right or left. Based on these possible driving maneuvers, the automated driving vehicle in the takeover process may execute driving maneuvers adapted optimally to the driver's behavior in a takeover process.

According to another aspect, decelerating may include one or more of the following options in dependency of a probability that the driver takes over in driving: reducing an engine power acting on wheels of the vehicle; braking; and emergency brake. Reduction of the engine power may include reducing an actuation of an acceleration pedal or in an automated driving mode reducing the amount of a gas-fuel-mixture or gas input into the cylinder of the vehicle engine via the throttle device or by means of the injector. In case of an electric vehicle, reduction of the engine power may include reducing the power supply (voltage and/or current) of an electric motor, which is configured to accelerate the vehicle. This may have the effect of a gentler and softer braking, while the vehicle moves economically.

Thus, based on the probability that the driver takes over in driving, intensity of braking may be adapted. This may enhance a driver's comfort, while jurisdictional requirements may be met and safety may be improved. For example, an emergency brake, since the driver has not taken over in driving during the leeway period, may be safer and more comfortable, when braking has started with small intensity before an emergency braking is executed.

According to a further aspect, monitoring a driver's behavior may include detecting of at least one non-driving related activity in particular of at least one of the group of non-driving related activities: monitoring of an environment; reading; and gaming. Further, the system may comprise an analysis unit for analyzing the driver's behavior in view of non-driving related activities, a determination unit for determining, if present, at least one non-driving related activity, and a modification unit for adapting the reference data based on the determined non-driving related activity. Based on empirical data and/or statistical data, differences in a driver's behavior after outputting a notification to take over in driving may be recognized in dependence on non-driving related activities of the driver. To improve reliability of the probability that the driver takes over in driving within the predetermined time period TT, it may be advantageous to consider this dependence in the reference data. Monitoring may also include retrieving data from a mobile device, like a mobile phone and/or a tablet, referring to the usage of the mobile device before and/or during a takeover process, to obtain information data concerning the non-driving activity of the driver.

According to another aspect, reference data may be based on at least one non-driving related activity of the driver and on at least one detected behavioral characteristic of the driver and a corresponding point in time relative to the output of the notification to take over in driving.

One or more embodiments may relate to a method for executing an automated driving maneuver in a takeover process of a vehicle from automated driving to manually driving. The method may comprise the steps of outputting to a driver a notification to take over in driving; monitoring a driver's behavior after outputting the request to take over in driving; examining the detected behavior of the driver based on reference data; and executing an automated driving maneuver based on the result of the examination and/or outputting a second notification to the driver concerning the takeover process.

According to an aspect, the step of monitoring a driver's behavior may include detecting of a behavioral characteristic of the driver and a corresponding point in time relative to the output of the notification to take over in driving, in particular at least one behavioral characteristic of the following group: gaze reaction (GR); gaze on the road (GoR); hand on a steering wheel (HoW); foot on a pedal (FoP); and turning automated driving off and taking over in driving (ADoff).

According to a further aspect, reference data may include data relating to a point in time until which a predetermined behavioral characteristic of a driver in response to the notification to take over in driving is expected, in particular based on empirical data and/or statistical data relating to takeover processes from automated driving to manually driving.

According to an aspect, examining the detected behavior of the driver may comprise a step of determining a probability p that a driver takes over in driving within a predetermined time period (TT) after the output of the notification to take over in driving at a time t=0, under the condition p(t) >= 0, wherein p(t <= TT) >p_{crit}, if the driver exhibits the predetermined behavior; and p(t<=TT) <p_{crit}, if the driver does not exhibit the predetermined behavior, with p_{crit} being a predetermined threshold value for executing a driving maneuver, wherein examination whether the driver exhibits the predetermined behavior is based on the reference data and on the detected behavior of the driver.

According to an aspect, the method may comprise the steps of providing reference data; storing data of a monitored behavior of the driver after outputting a notification to take over in driving including behavioral characteristics and corresponding points in time; and adapting the reference data based on the stored data of the monitored behavior of the driver after outputting a notification to take over in driving.

According to another aspect, the automated driving maneuver may comprise at least one of the following maneuvers: changing a lane or keeping the lane; accelerating or decelerating the vehicle or maintaining the velocity of the vehicle; and turning right or left.

According to an aspect, decelerating may include one or more of the following options in dependency of a probability that the driver takes over in driving: reducing an engine power acting on wheels of the vehicle; braking; and emergency brake.

According to an aspect, monitoring the driver's behavior may include detecting of at least one non-driving related activity in particular in view of at least one of the group of non-driving related activities: monitoring of an environment; and reading; gaming. Further, the method may comprise the steps of analyzing the driver's behavior in view of non-driving related activities; determining, if present, at least one non-driving related activity; and adapting the reference data based on the determined non-driving related activity.

According to another aspect, reference data may be based on at least one non-driving related activity of the driver and on at least one detected behavioral characteristic of the driver and a corresponding point in time relative to the output of the notification to take over in driving.

### BRIEF DESCRIPTION OF THE DRAWINGS

Figure 1 shows a schematic illustration of a system for executing an automated driving maneuver in a takeover process of a vehicle from automated driving to manually driving according to an embodiment.
Figure 2 shows a process flow schematically illustrating a method for executing an automated driving maneuver in a takeover process of a vehicle from automated driving to manually driving according to an embodiment.
Figure 3 shows a process flow which schematically illustrates a method for executing an automated driving maneuver in a takeover process of a vehicle from automated driving to manually driving according to an embodiment.
Figure 4 shows a process flow which schematically illustrates a method for executing an automated driving maneuver in a takeover process of a vehicle from automated driving to manually driving according to an embodiment.
Figures 5a to 5g illustrate an example for executing an automated driving maneuver in a takeover process.
Figure 6 illustrates an example for probability distributions of a gaze reaction in reply to an output notification over time based on several non-driving related activities of a driver.
Figure 7 illustrations a classification of behavioral characteristics of a driver relating to a takeover process in sensoric, cognitive and motoric domains.
Figure 8 illustrates an example for generating reference data according to an embodiment.
Figure 9 illustrates a state diagram of behavioral characteristics of a driver during a takeover process referring to behavioral characteristics according to an embodiment.
Figure 10 illustrates a cluster showing a relation between non-driving related activities of a driver and the probabilities over time that the driver exhibits behavioral characteristics.

### DETAILED DESCRIPTION

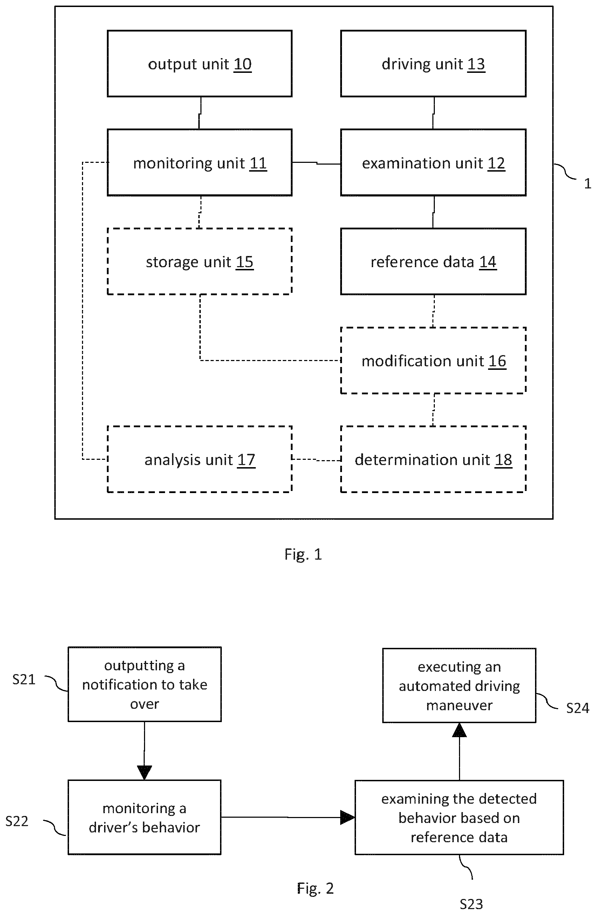

Figure 1 shows a schematic illustration of a system 1 for executing an automated driving maneuver in a takeover process of a vehicle from automated driving to manually driving according to an embodiment. The system 1 may comprise an output unit 10, a monitoring unit 11, a driving unit 13, a monitoring unit 11, an examination unit 12 and reference data 14. The system may be implemented in a vehicle, including cars, trucks airplanes, drones, ships, boats, for example, and may be implemented as part of an intermediate automated driving system. For example, the intermediate automated driving system may be configured to operate at an intermediate level in the Levels of Driving Automation, as defined by the SAE International. For example, out of the six levels in the Levels of Driving, where SAE Level 0 essentially amounts to no automation for driving and SAE Level 5 amounts to full automation for driving, the intermediate level may be SAE Level 3. In SAE Level 3, an occupant may need to takeover driving of the vehicle from the intermediate automated driving system. The intermediate automated driving system thus may be tasked with driving, task an occupant with driving, or transition there-between. In some embodiments, the units of the system 1 may be implemented as software running on one or more electronic control units. Further, some units may be grouped to one or more units or provided separately. Some sensors, output devices and units of the system 1 may be shared with other systems.

The output unit 10 may output a notification, a request to intervene (R2I, key SAE definition) to a driver 51 of the vehicle to take over in driving within a predetermined time period (leeway period / transition time) TT, after an information for a request to intervene to take over in driving is provided, for example, by a level 3 automated driving system of the automated driving vehicle.

After outputting of the notification R2I by the output unit 10, the monitoring unit 11 may monitor a driver's behavior and in particular the presence and the absence of a driver's reactions (behavioral characteristics). In particular, reactions corresponding to the notification R2I to take over in driving output by the output unit 10 may be monitored. The monitoring unit 11 may monitor/detect behavioral characteristics, like a gaze reaction (GR), presence and absence of a foot on a pedal (FoP), of a driver's gaze on the road (GoR), of a hand on the steering wheel (HoW), of turning automated driving off and taking over in driving (ADoff), etc. For monitoring the driver 51, the monitoring unit 11 may comprise several sensors, like capacitive sensors, force sensors, camera sensors, etc. In some embodiments, monitoring may include detection of non-driving related activities like reading and gaming on an electronic mobile device and the monitoring unit may comprise a unit for retrieving data of a mobile device, like a mobile phone or a tablet computer to determine the type of usage, for example reading, taking pictures, having a phone call, gaming, messaging, etc., of the mobile device by a driver during a takeover process.

The examination unit 12 may examine the data collected by the monitoring unit 11 based on reference data 14 to determine a probability p that the driver 51 takes over in driving within the leeway period TT. The reference data 14 may be stored in a non-volatile storage, may be provided by any external system or may be generated out of stored data. The expressiveness of the several behavioral characteristics on the result of the examination unit 12 may differ. For example, a gaze reaction (GR) in response to the notification R2I to take over in driving may have a lower informative value for the prediction whether the driver 51 takes over in driving within the leeway period TT than the detection of a movement of a foot onto a pedal (FoP).

Based on the result of the examination unit 12, which may include a measure whether the driver 51 will take over in driving within the leeway period TT, the driving unit 13 may execute a driving maneuver or may make a system, like an automated driving system, executing an automated driving maneuver. Executing an automated driving maneuver may include steering, decelerating and/or accelerating.

In some embodiments, the system 1 may further comprise a storage unit 15 and a modification unit 16. The storage unit 15 may be configured to store data of the behavior of a driver 51 during a takeover process and corresponding points in time relative to a point in time, at which the notification R2I is output to take over in driving, collected by the monitoring unit 11. Based on the stored behavior and the corresponding points in time, the modification unit 16 may adapt the reference data 14. Adapting the reference data 14 may include replacing the reference data 14 by a sum of the reference data 14 and the stored data, in particular of a weighted sum of the data sets. Alternatively, the reference data may be replaced by data generated by the modification unit and/or data provided by the monitoring unit 11. The examination unit 12 may then examine the data provided by the monitoring unit 11 based on the adapted reference data 14.

In some embodiments, the modification unit may utilize artificial intelligence algorithm(s) to adapt the reference data. For training the algorithm (machine learning), the data stored in the storage unit 15 and/or data provided by the monitoring unit 11 may be used.

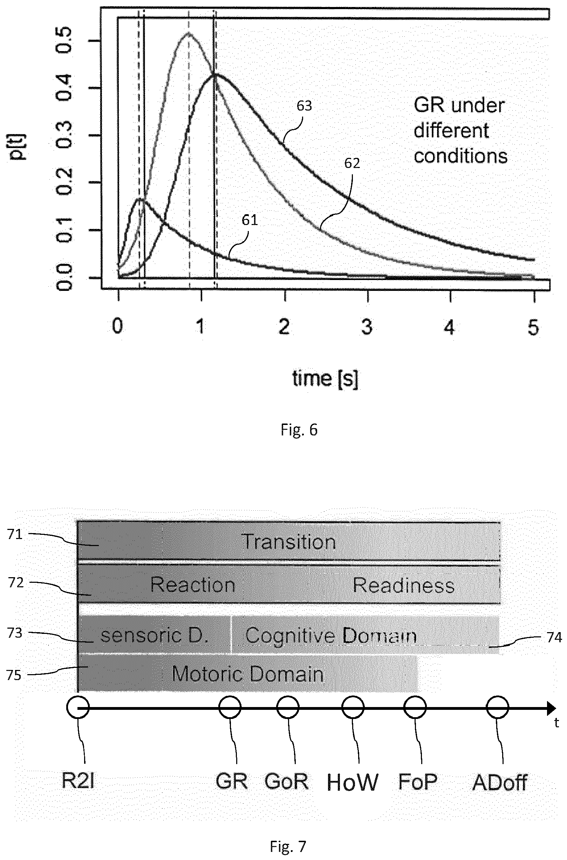

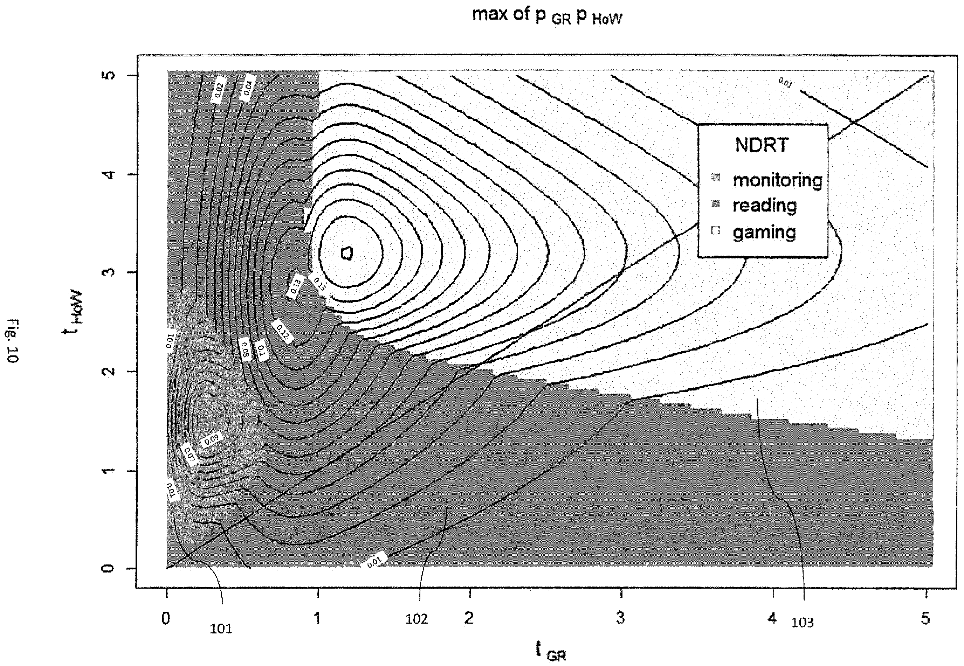

In some embodiments, the system 1 may further comprise an analysis unit 17, a determination unit 18 and a modification unit 16. The analysis unit 17 may analyze data collected by the monitoring unit 11 during the takeover process with respect to non-driving related activities of the driver 51. This may include comparing the collected data of the monitoring unit 11 with sample data referring to non-driving related activities. Sample data may be generated empirically. Based on the analysis of the analysis unit 17, the determination unit 18 may determine a non-driving related behavior of the driver 51 during the takeover process. The modification unit 16 may adapt the reference data 14 based on the determined non-driving related activity of the driver 51, for example, based on the data provided in Figure 7 and/or Figure 11. The examination unit 12 may then examine the data provided by the monitoring unit 11 referring to the behavior of the driver 51 after outputting the notification R2I to take over in driving with the adapted reference data 14.

Figure 2 shows a process flow which schematically illustrates a method for executing an automated driving maneuver in a takeover process of a vehicle from automated driving to manually driving according to an embodiment. The method may be carried out by a system for executing an automated driving maneuver in a takeover process of a vehicle from automated driving to manually driving as described above with reference to Figure 1. It may be possible to change the order of steps, to summarize steps and/or to add new steps without changing the functionality of the described process. It may be also possible to execute some steps in parallel.

In a first step S21, a notification R2I may be output to a driver 51 to take over in driving. The notification R2I may be output visually, for example, on a display and/or acoustically, for example, via loudspeakers. A haptic output, for example, a vibration of a seat or a vibration of a mobile phone connected to the vehicle, may highlight the notification R2I. In a further step S22, after outputting the notification R2I to take over in driving, a driver's behavior may be monitored. Monitoring may also include detecting a gaze reaction (GR), a driver's gaze on the road (GoR), a driver's hand on the steering wheel (HoW), a foot on a pedal (FoP) and/or a turned off automated driving system (ADoff). Monitoring may also include detecting an absence of a gaze reaction (GR), a driver's gaze on the road (GoR), a driver's hand on the steering wheel (HoW), a foot on a pedal (FoP) and/or a turned off automated driving system (ADoff).

In a further step S23, the detected behavior of the driver 51 during the takeover process may be examined based on reference data 14. The reference data 14 may be based on experimental measurements and may provide data referring to successful takeover processes. In particular, the reference data 14 may include data referring to expected behaviors implying that the driver 51 takes over in driving within a leeway period TT with a predetermined probability. Examination may include checking, whether a corresponding norm behavior has been monitored in the step S22 of monitoring. Based on the result of the step S23 of examining, an automated driving maneuver may be executed in a step S24.

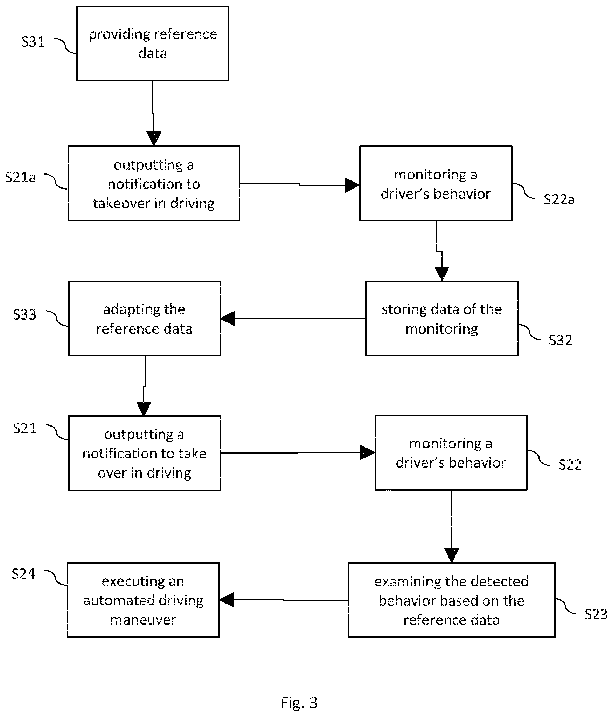

Figure 3 shows a process flow which schematically illustrates a method for executing an automated driving maneuver in a takeover process of a vehicle from automated driving to manually driving based on the process flow shown in Figure 2 according to an embodiment. In the process flow of Figure 3 additional steps S31, S21a, S32, S33 are added in comparison to the process flow shown in Figure 2.

In a first step S31, reference data 14 is provided and in a further step S21a a notification R2I to take over in driving is output to the driver 51. Similar to the process flow of Figure 2, after outputting the notification R2I to take over in driving in step S21a, a driver's behavior may be monitored as shown in step S22a. The monitored behavior of the driver 51 and corresponding points in time relative to the point in time of outputting the notification R2I to take over in driving may be stored in a step S32. In a further step S33, the reference data 14 may be adapted based on the stored data of step S32. Thus, in a further takeover process as shown with steps S21, S22, S23 and S24 the examination of a detected behavior as executed in step S23 may provide results matched to a typical behavior of an individual driver during a takeover process.

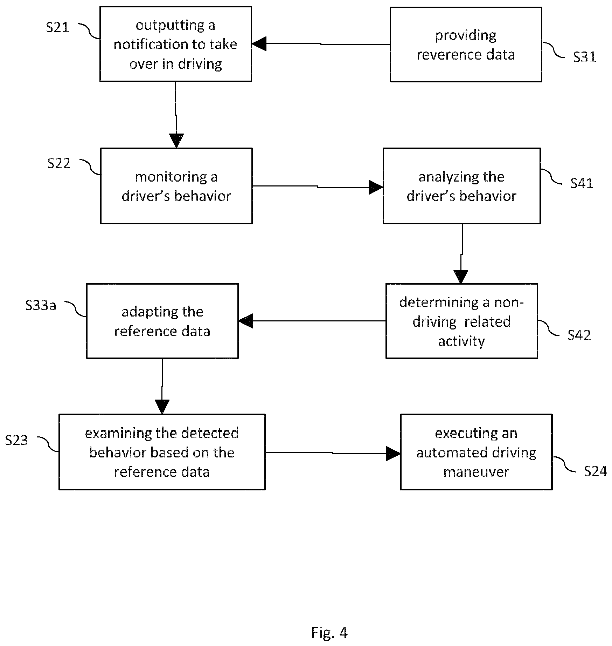

Figure 4 shows an embodiment of a process flow which schematically illustrates a method for executing an automated driving maneuver in a takeover process of a vehicle from automated driving to manually driving based on the process flow shown in Figure 2. In the process flow of Figure 4 additional steps S31, S41, S42 and S33a are added in comparison to the process flow shown in Figure 2.

In a first step S31, reference data 14 may be provided. The second and third steps S21 of outputting a notification R2I to take over in driving and S22 of monitoring a driver's behavior are identical to the corresponding steps shown in Figure 2. In a further step S41, the driver's behavior monitored in step S22 may be analyzed, in particular with respect to non-driving related activities of the driver 51, for example, playing a game on a mobile device, reading, watching the environment, etc. In the following step S42, at least one non-driving related activity may be determined. Based on the determined non-driving related activity, the reference data 14 may be adapted in a step S33a. In step S23, examining the detected behavior may then be based on the adapted reference data 14.

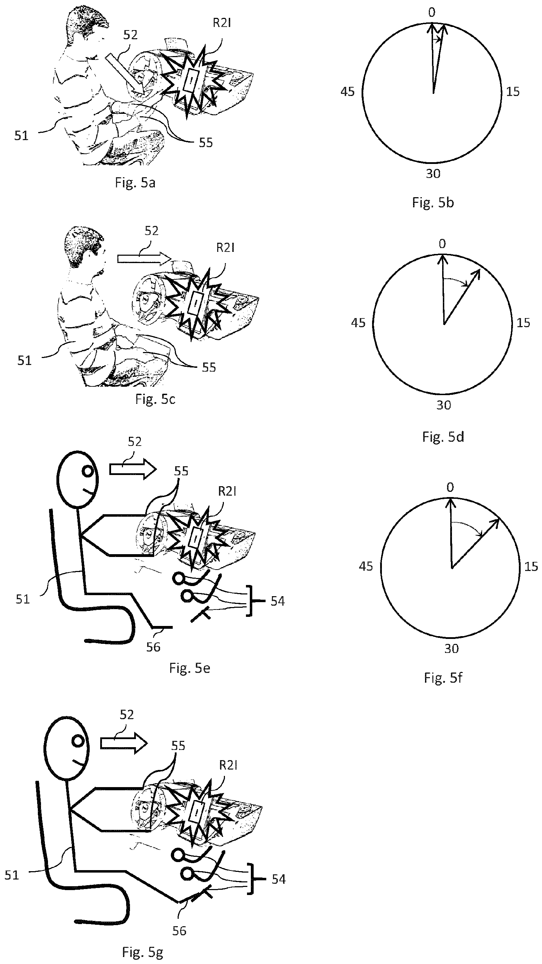

Figures 5a to 5g illustrate an example for executing an automated driving maneuver in a takeover process. In Figure 5a a driver 51 is shown in a vehicle driving in an automated driving mode, performing a non-driving related task. A driver's gaze 52 is directed to a tablet computer. At this moment, a notification R2I to take over in driving is output to the driver 51. After outputting the notification R2I, the system 1 may monitor the driver's behavior via the monitoring unit 11. The driver's behavior may include presence and/or absence of multiple behavioral characteristics, like a gaze reaction (GR), a hand on a steering wheel (HoW), etc. The monitoring unit 11 may detect via a camera that a driver's gaze 52 is focusing on the tablet computer. Further, the monitoring unit 11 may retrieve data referring to the type of usage of the tablet computer by the driver 51 from the tablet computer.

Based on data relating to a driver's behavior collected by the monitoring unit 11, the analysis unit may analyze the driver's behavior, which may comprise recognition of activities of the driver 51. The analysis unit may examine correspondence of the data provided by the monitoring unit 11 and sample data referring to a particular activity. Sample data may be generated empirically and/or may be statistical data. Based on the result of the analysis unit 17, the determination unit 18 may determine that the driver 51 is playing a game on the tablet computer, for example.

Based on the determination that the driver 51 is playing a game on the tablet computer, the reference data 14 may be adapted. For example, the reference data 14 relating to the time period between outputting the notification R2I to take over in driving and the latest point in time at which a gaze reaction (GR) may be expected to be monitored may be adapted from 2 seconds to 3 seconds. The reference data 14 may refer to data that it is likely that the driver 51 takes over in driving within the leeway period TT. The reference data 14 relating to other behavioral characteristics like a hand on a wheel, etc. may be adapted accordingly.

As shown in Figures 5b and 5c the driver's gaze 52 changes within 2 seconds after outputting the notification R2I to take over in driving. The monitoring unit 11 may detect the change of the driver's gaze 52 and may forward corresponding data to the examination unit 12. The examination unit 12 may compare data of the monitored behavior of the driver 51 with reference data 14. According to the adapted reference data 14, where a gaze reaction is expected within 3 seconds after outputting the notification R2I to take over in driving, the behavior of the driver 51 may be examined to be as expected and the probability p that the driver 51 takes over in driving within the leeway period may be set as 0.6. The threshold for reducing the engine power acting on the wheels of the vehicle may be set as 0.45, and the thresholds for other driving maneuvers relating to decelerating may be set even lower. Thus, the driving unit 13 may allow the automated driving system maintaining the speed of the vehicle.

In Figures 5d and 5e, it is shown that it takes 6 seconds after outputting the notification R2I to take over in driving until the driver 51 has a hand on the steering wheel (HoW). Thus, the monitoring unit may detect 5 seconds after outputting the notification R2I to take over in driving, that there is no hand on the steering wheel and corresponding data may be provided to the examination unit. The examination unit may compare the detected absence of the behavioral characteristic with corresponding adapted reference data 14. The adapted reference data 14 may include data indicating data that within 5 seconds after outputting the notification R2I to take over in driving a hand on the wheel (HoW) is expected. As a result, the examination unit may determine the probability p that the driver 51 takes over in driving within the leeway period TT as 0.4. A threshold for reducing the engine power acting on the wheels may be predetermined as 0.45 and a threshold for braking may be predetermined as 0.35.

Thus, the driving unit 13 may execute the driving maneuver reducing the engine power acting on the wheels of the vehicle since the probability p that the driver 51 takes over in driving within the leeway period reached the threshold value of reducing the engine power acting on the wheels. The driving maneuver of reducing the engine power acting on the wheels may include that a predetermined minimum speed of the vehicle may be maintained to avoid traffic obstructions by the vehicle in a takeover process. Further, the output unit may output a second notification to take over in driving to draw the driver's attention to the delay in taking over in driving.

Further, 6 seconds after outputting the notification R2I to take over in driving, the monitoring unit 11 may detect that a driver's hand is on the steering wheel. Based on the data of the monitoring unit 11, the examination unit 12 may set the probability p that the driver 51 takes over in driving within the leeway period TT to 0.7. Based on the latest probability p that the driver 51 takes over within the leeway period, the vehicle may execute a driving maneuver, which may be maintaining the latest speed of the vehicle or accelerating to a predetermined speed. Based on a belated behavioral characteristic of a driver 51, reference data 14 referring to further expected behavioral characteristics of the driver 51 may be adapted. Thus, a general belated reaction of the driver 51 may be considered during a complete takeover process and correspondence between the reference data 14 and a typical behavior of the driver 51 may be improved.

As shown in Figures 5f and 5g, the driver 51 puts a foot 56 on a pedal of a group of pedals 54 within 6.5 seconds after outputting the notification R2I to take over in driving. The monitoring unit may detect this behavior via force sensors on the pedals 54. Based on these data and data that a driver's hand is on the wheel and data that the driver's gaze is focused on the traffic, the examination unit may detect that the driver takes over in driving and turns the automated driving system off ADoff.

Thus, the probability p determined by the examination unit 12 may be a measure, whether the transition is completed, the intervention starts in time and/or the intervention will be successfully.

Figure 6 illustrates examples for probability distributions 61, 62, 63 of a gaze reaction in reply to an output notification R2I over time generated on the basis of experimental data. The probability distributions may have the same or a similar form as an Ex-Gauss distribution. One probability distribution 61 may refer to drivers monitoring the surrounding of the vehicle. A second probability distribution 62 may refer to drivers, which are reading, and a third probability distribution 63 may refer to drivers playing a game, in particular on a mobile device. The peak of the probability distribution 61 of monitoring has a value of circa 0.17, whereas the maxima of the probability distributions referring to a non-driving related activity of reading and gaming have a value of circa 0.52 and 0.42, respectively. The points in time of the maxima of the probability distributions 61, 62, 63 are circa at 0.3, 0.9 and 1.2 seconds, respectively, after outputting the notification R2I to take over in driving.

The probability distributions may be used to obtain corresponding reference data 14 referring to a gaze reaction of the driver 51 in response to an output notification R2I. These probability distributions have their maximum at a later point in time, whereas it is more likely that the driver exhibits a gaze reaction (GR).

Figure 7 illustrations a relation between a takeover process and a driver's abilities over the time t, in particular, a driver's sensoric, cognitive and motoric abilities revealing transition 72 of a driver's reaction to a driver's readiness in relation to behavioral characteristics (GR, GoR, HoW, FoP, ADoff). The takeover process and, therefore, a transition 71 starts with a notification R2I (request to intervene) to take over in driving output to a driver. Next, it may be expected that the driver shows a gaze reaction (GR). This time period between outputting the notification R2I and the gaze reaction (GR) may belong to a sensoric domain 73, where it is expected that the driver senses the notification R2I. After the driver exhibits the gaze reaction (GR), it may be assumed that the driver is aware of the information to take over in driving and thus the cognitive domain, where a driver's attention may be directed to focusing the gaze on a road (GoR), putting a hand on a steering wheel (HoW), putting a foot on a pedal (FoP), and turning automated driving off and taking over in driving (ADoff). Consequently, during this period cognitive abilities 74 may be required.

From the beginning of the transition 71 by outputting the notification R2I to take over in driving until a foot is on a pedal (FoP), motoric abilities of a driver may be required. Based on such a classification reference data may be adapted to drivers, which have a good sensoric and/or the cognitive ability.

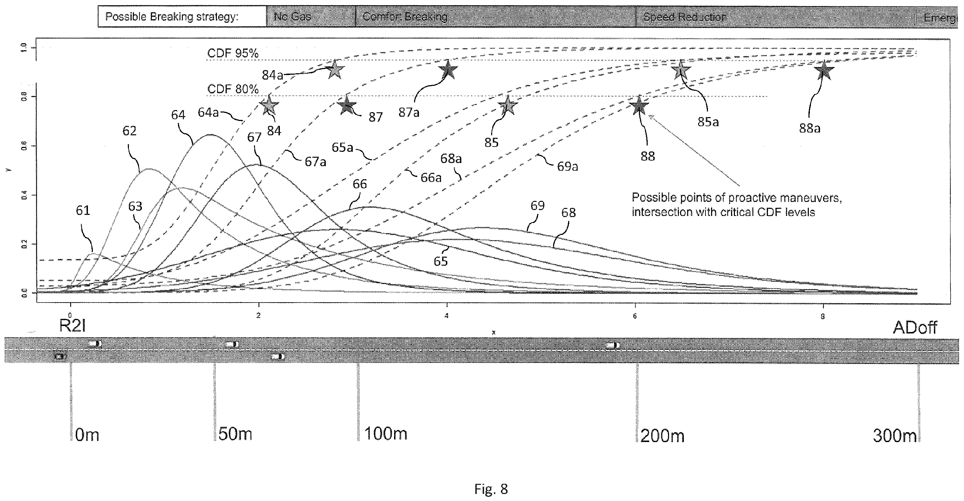

Figure 8 illustrates an example for generating reference data 14. The x-axis shows the time in seconds corresponding to a covered distance of a vehicle in a takeover process and the y-axis probability or cumulative distribution values. The solid lines 61 - 69 show probability distributions and the dotted lines 64a - 69a show cumulative distribution functions referring to the probability distributions 64 - 69, respectively. The graphs 61, 64, 67 may relate to driver's exhibiting a non-driving related activity of watching the environment and a non-detectable non-driving related activity. The graphs 62, 65, 68 may relate to driver's showing a non-driving related activity of reading and the graphs 63, 66, 69 may relate to driver's exhibiting a non-driving related activity of gaming.

The graphs 61-63 relate to probability distributions of a gaze reaction (GR) of a driver 51, the graphs 64 - 66 relate to probability distributions of a driver's hand on the steering wheel (HoW) and the graphs 67 - 69 relate to probability distributions of turning automated driving off and taking over in driving (ADoff).

At points in time 84, 85, 87, 88, the cumulative distribution functions 64a, 65a, 67a, 68a reach the value of 0.8, which means that 80% of drivers, which exhibited the corresponding non-driving activity, exhibit the behavioral characteristic of a hand on the steering wheel (HoW) or rather turning automated driving off and taking over in driving (ADoff) until the points in time. Similarly, at the points in time 84a, 85a, 87a, 88a, the cumulative distribution functions 64a, 65a, 67a, 68a reach the value of 0.95. The reference data 14 may include the points in time 84, 85, 87, 88 or rather 84a, 85a, 87a, 88a referring to the corresponding non-driving activities and the corresponding behavioral characteristics.

Further, in Fig. 8 a possible breaking strategy is shown on the top referring to a scenario in which the driver 51 does not exhibit a reaction in response to the notification R2I to take over in driving, because, for example, the driver 51 is sleeping. As shown at a point in time t=0 a notification R2I may be output to take over. Since in response to the notification R2I, there is no reaction monitored by the monitoring unit 11 within 2 seconds, the examination unit 12 may examine the absence of a corresponding reaction with reference data 14 and lower the probability p that the driver 51 takes over within the leeway period TT. Based on the result of the examination unit 12, the driving unit 13 may execute a driving maneuver including reducing the engine power acting on the wheels of the vehicle and the output unit 10 may output a second notification to the driver 51 to take over in driving.

After 3 seconds, there is still no reaction of the driver 51 in response to the second notification to take over in driving, which may again be monitored by the monitoring unit 11. Based on collected data of the monitoring unit 11 and the reference data 14, the examination unit may again reduce the probability p that the driver 51 takes over within the leeway period TT. Based on the probability p determined by the examination unit 12, the driving unit 13 may execute a comfort brake, which may increase intensity of deceleration without lowering comfort of the occupants. After 6 seconds of absence of a reaction of the driver 51 in response to the notification R2I, which may be detected by the monitoring unit 11, the examination unit may examine the detected absence again based on reference data 14 and lower the probability p that the driver 51 takes over within in the leeway period TT further. Based on the result of the examination, the driving unit 13 may execute a speed reduction. Speed reduction may also include speed reduction to a predetermined velocity. Additionally to the speed reduction, the driving maneuver may include changing a lane to an emergency lane, if possible, to avoid traffic obstructions by the vehicle in the takeover process.

After 8.5 seconds the leeway period TT may end. Since the driver 51 has not taken over until then, the takeover process failed and the automated driving system may make the vehicle executing an emergency brake. Since the vehicle may be driving on the emergency lane and speed has been reduced already, the impact of the emergency brake may be lower in comparison to conventional takeover processes. Further, the leeway period has been granted to the driver 51 in full length.

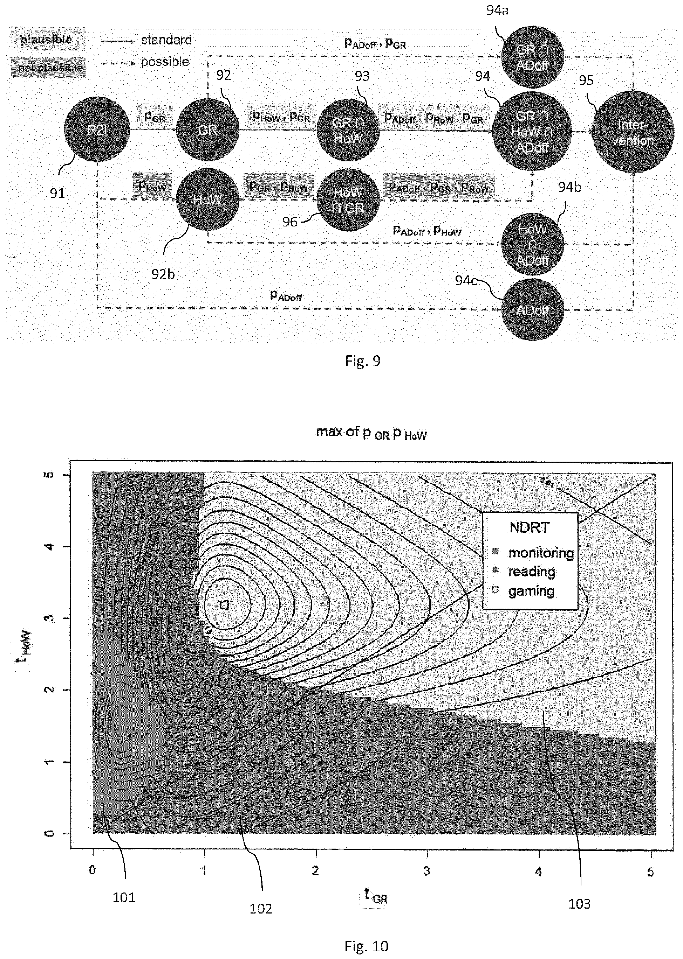

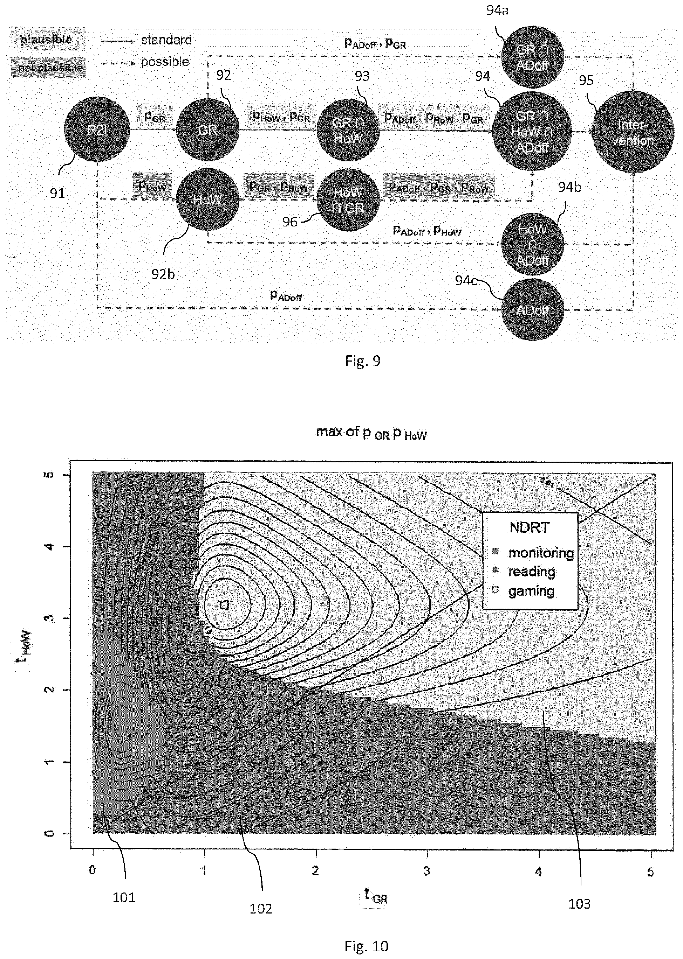

Figure 9 illustrates a state diagram of behavioral characteristics of a driver 51 during a takeover process referring to behavioral characteristics according to an embodiment. Without changing functionality, states may be summarized and/or split. Further, states may be added, replaced or neglected. The diagram reveals that for determining an overall probability that the driver takes over in driving within a leeway period TT different behavioral characteristics and their corresponding probabilities may be combined.

As shown in the legend of the state diagram, there may be plausible transitions and non-plausible transitions and possible transitions (dashed lines) and standard transitions (solid lines) between the states. By outputting a notification R2I automatically state 91 may be entered. Starting from state 91, detection of a gaze reaction, detection of a hand on a steering wheel or taking over in driving may cause a transition to the states 92, 92b or 94c, respectively. At the state 92, it is possible to switch to state 93 or 94a, when a hand on the steering wheel is detected or it is detected that the driver has taken over in driving, respectively. At a state 93, a transition to state 94 may occur, when it is detected that the driver has turned automated driving off and takes over in driving.

At a state 92b, a transition to state 96 or 94b is possible, when a gaze reaction (GR) is detected or it is detected that the driver has taken over in driving, respectively. When it is detected that the driver has taken over in driving at a state 96, it may be switched to state 94. This sequence in states may be possible but may not be plausible according to empirical data of takeover situations.

At each of the states 94, 94a, 94b and 94c, transition to state 95 may be executed, when an intervention by the driver has been started.

The solid lines between the states 91, 92, 93, 94 and 95, show that these transitions are standard and plausible transitions, wherein all other transition are possible transitions. Further, it is shown that transition between the states 91, 92b, 96 and 94 may be less plausible, since it may be unlikely that the driver puts a hand on the steering wheel (HoW) before a gaze reaction (GR) is shown.

Figure 10 illustrates a cluster showing a relation between non-driving related tasks (NDRT) or activities of a driver 51 and the probabilities over time that the driver 51 exhibits a gaze reaction p_{GR} and that the driver 51 has a hand on a steering wheel p_{HoW} in response to a notification R2I to take over in driving, state 93. The x-axis shows the time referring to the point in time of a gaze reaction GR and the y-axis shows the time referring to the point in time at which a hand on the steering wheel is detected HoW. The cluster shows the maximum with respect to the non-driving related activity of a driver of the product p_{GR} times p_{HoW}. The considered non-driving related activities are monitoring 101, reading 102 and gaming 103. Below a diagonal of the cluster the event sequences may be considered as non-plausible, since it may be expected that a hand on the steering wheel HoW is detected before a gaze reaction GR is detected. The peaks of the cluster are marked with corresponding circles. Based on Figure 10, it may be pointed out that there is a "reading corridor" in the gaze reaction interval t_{GR} = [0.7, 0.9], in which it is most likely that a gaze reaction is exhibited by driver with a non-driving related activity of reading.

### REFERENCE NUMERALS

TT predetermined time period (transition time / leeway period)
GR gaze reaction
GoR gaze on road
HoW hand on steering wheel
ADoff turning automated driving off and taking over in driving
CDF cumulative distribution function
R2I notification to take over in driving/(SAE's definition)
p probability that a driver takes over in driving within the leeway period TT
p_{HoW} probability that a driver puts a hand on the wheel
p_{GR} probability that a driver exhibits a gaze reaction
p_{ADoff} probability that the driver turns automated driving off and takes over in driving
t time
1 system for executing an automated driving maneuver in a takeover process
10 output unit
11 monitoring unit
12 examination unit
13 driving unit
14 reference data
15 storage unit
16 modification unit
17 analysis unit
18 determination unit
51 driver
52 driver's gaze
54 pedals
55 hands
56 foot
61 - 69 distribution functions
64a - 69a cumulative distribution function (CDF)
71 transition from automated driving to manually driving
71 transition from reaction to readiness
73 sensoric domain
74 cognitive domain
75 motoric domain
84, 85, 87, 88 possible points of proactive maneuvers, intersection with critical CDF level of 0.8
84a, 85a, 87a, 88a possible points of proactive maneuvers, intersection with critical CDF level of 0.95
91 - 96, 92b, 94a-94c states of a state diagram
101 monitoring
102 reading
103 gaming

## Claims

1. A system for executing an automated driving maneuver in a takeover process of a vehicle from automated driving to manually driving comprising:
- an output unit for outputting to a driver a notification to take over in driving
- a monitoring unit for monitoring a driver's behavior after outputting the request to take over in driving,
- an examination unit for examining the detected behavior of the driver based on reference data, and
- a driving unit for executing an automated driving maneuver based on the result of the examination and/or outputting a second notification to the driver concerning the takeover process.

2. A system according to claim 1, wherein
monitoring a driver's behavior includes detecting of a behavioral characteristic of the driver and a corresponding point in time relative to the output of the notification to take over in driving, in particular at least one behavioral characteristic of the following group:
- gaze reaction (GR)
- gaze on the road (GoR)
- hand on a steering wheel (HoW)
- foot on a pedal (FoP)
- turning automated driving off and taking over in driving (ADoff).

3. A system according to claim 2, wherein
reference data include data relating to a point in time until which a predetermined behavioral characteristic of a driver in response to the notification to take over in driving is expected, in particular based on empirical data and/or statistical data relating to takeover processes from automated driving to manually driving.

4. A system according to one of the claims 2 to 3, wherein
examination of the examination unit comprises determination of a probability p that a driver takes over in driving within a predetermined time period (TT) after the output of the notification to take over in driving at a time t=0, under the condition
p(t) >= 0, wherein
p(t <= TT) >p_{crit}, if the driver exhibits the predetermined behavior, and
p(t<=TT) < p_{crit}, if the driver does not exhibit the predetermined behavior,
with p_{crit} being a predetermined threshold value for executing a driving maneuver,
wherein examination whether the driver exhibits the predetermined behavior is based on the reference data and on the detected behavior of the driver.

5. A system according to one of the claims 1 to 4 comprising:
a storage unit for storing data of a monitored behavior of the driver after outputting a notification to take over in driving including behavioral characteristics and corresponding points in time provided by the monitoring unit, and
a modification unit for adapting the reference data based on the stored data of the monitored behavior of the driver after outputting a notification to take over in driving.

6. A system according to one of the claims 1 to 5, wherein
the automated driving maneuver comprises at least one of the group:
- changing a lane or keeping the lane
- accelerating or decelerating the vehicle or maintaining the velocity of the vehicle
- turning right or left.

7. A system according to claim 6, wherein
decelerating includes one or more of the following options in dependency of a probability that the driver takes over in driving:
- reducing an engine power acting on wheels of the vehicle
- braking,
- emergency brake.

8. A system according to one of the claims 1 to 7,
wherein monitoring a driver's behavior includes detecting of at least one non-driving related activity in particular in view of at least one of the group of non-driving related activities:
- monitoring of an environment
- reading
- gaming
wherein the system comprises
an analysis unit for analyzing the driver's behavior in view of non-driving related activities
a determination unit for determining, when present, at least one non-driving
related activity
a modification unit for adapting the reference data based on the determined non-driving related activity.

9. A system according to one of the claims 1 to 8, wherein
reference data is based on at least one non-driving related activity of the driver and on at least one detected behavioral characteristic of the driver and a corresponding point in time relative to the output of the notification to take over in driving.

10. A method for executing an automated driving maneuver in a takeover process of a vehicle from automated driving to manually driving comprising the steps of:
- outputting to a driver a notification to take over in driving
- monitoring a driver's behavior after outputting the request to take over in driving,
- examining the detected behavior of the driver based on reference data, and
- executing an automated driving maneuver based on the result of the examination and/or outputting a second notification to the driver concerning the takeover process.

11. A method according to claim 10, wherein
the step of monitoring a driver's behavior includes detecting of a behavioral characteristic of the driver and a corresponding point in time relative to the output of the notification to take over in driving, in particular at least one behavioral characteristic of the following group:
- gaze reaction (GR)
- gaze on the road (GoR)
- hand on a steering wheel (HoW)
- foot on a pedal (FoP)
- turning automated driving off and taking over in driving (ADoff).

12. A method according to claim 11, wherein
reference data include data relating to a point in time until which a predetermined behavioral characteristic of a driver in response to the notification to take over in driving is expected, in particular based on empirical data and/or statistical data relating to takeover processes from automated driving to manually driving.

13. A method according to one of the claims 11 or 12, wherein
examining the detected behavior of the driver comprises a step of determining a probability p that a driver takes over in driving within a predetermined time period (TT) after the output of the notification to take over in driving at a time t=0, under the condition
p(t) >= 0, wherein
p(t <= TT) >p_{crit}, if the driver exhibits the predetermined behavior, and
p(t<=TT) <p_{crit}, if the driver does not exhibit the predetermined behavior,
with p_{crit} being a predetermined threshold value for executing a driving maneuver,
wherein examination whether the driver exhibits the predetermined behavior is based on the reference data and on the detected behavior of the driver.

14. A method according to one of the claims 10 to 13, wherein
the automated driving maneuver comprises at least one of the following maneuvers:
- changing a lane or keeping the lane
- accelerating or decelerating the vehicle or maintaining the velocity of the vehicle
- turning right or left.

15. A method according to one of the claims 10 to 14,
wherein monitoring the driver's behavior includes detecting of at least one non-driving related activity in particular in view of at least one of the group of non-driving related activities:
- monitoring of an environment
- reading
- gaming,
wherein the method comprises the steps of:
analyzing the driver's behavior in view of non-driving related activities
determining, if present, at least one non-driving related activity
adapting the reference data based on the determined non-driving related activity.
